Europäisches Patentamt

**European Patent Office**

**Office européen des brevets**

(19)

(11) Publication number: **0 328 187**
A2

# EUROPEAN PATENT APPLICATION

(12)

(21) Application number: 89200211.4

(22) Date of filing: 01.02.89

(51) Int. Cl.⁴: **E05F 11/48 , B60J 1/17**

(30) Priority: 11.02.88 IT 1937288

(43) Date of publication of application:
16.08.89 Bulletin 89/33

(84) Designated Contracting States:
AT BE CH DE ES FR GB GR IT LI LU NL SE

(71) Applicant: ROCKWELL GOLDE ITALIANA
S.p.A.
Via Briantea, 342
I-22032 Albese con Cassano Como(IT)

(72) Inventor: Montecchi, Massimo
Via Fornacetta, 5
I-22040 Anzano del Parco Como(IT)
Inventor: Frigerio, Domenico
Via A. Sciesa, 31
I-22036 Erba Como(IT)

(74) Representative: Riccardi, Sergio
Riccardi & Co. Via Macedonio Melloni, 32
I-20129 Milano(IT)

(54) **Noise damping and clearance recovery contoured strip for window regulator guides.**

(57) A contoured strip to be manufactured in antifriction plastic material to be inserted in the slit in the tubular window regulator guide in order to dampen the noise produced by the running of the flexible rack cable inside the guide and at the same time to act as a clearance recovery means.

Fig. 3

# NOISE DAMPING AND CLEARANCE RECOVERY CONTOURED STRIP FOR WINDOW REGULATOR GUIDES

This invention relates to a contoured strip in antifriction plastic material which is applied to the slit of the window regulator guides with the aim of reducing the noise caused by the passage of the rack cable and to maximise the coupling clearance with particular reference to sections which are not in a straight line and connected to the door window regulator driving assembly.

It is known that many types of powered window regulators or manually operated window regulators comprise a tubular guide with a rounded profile through which runs a flexible rack cable which is capable of raising and lowering the door window. As it runs, particularly in sections which are not in a straight line leading off from the regulator driving assembly, this rack mechanism tends to knock against and run along the inside walls of the open tubular guide thus creating noise inside the interior compartment of the vehicle. Since the window guide is open along its length, deposits of dust and similar substances build up on the cable as time passes and as a result the window regulator mechanism binds up to an extent which can also produce damage to the geared motor unit.

- This invention eliminates these disadvantages since it almost totally eliminates noise and facilitates the movement, making it more precise, and at the same time hermetically seals the profile of the window guide, this protecting the rack cable from all external agents such as dust, water, earth and other things which, as everyone knows, become deposited in the horizontal slit of the window run channel.

The invention consists of a contoured strip of antifriction plastic material which is applied to the non-linear and vertical sections of the tubular guide in which the flexible rack cable runs, said strip having a shape which is such that it clips into the longitudinal aperture in the tubular regulator guide.

These and other more specific characteristics will be more clearly described in the following more detailed description, provided purely as a non-limiting description of the scope of the invention, supported by the attached illustrative drawings in which:

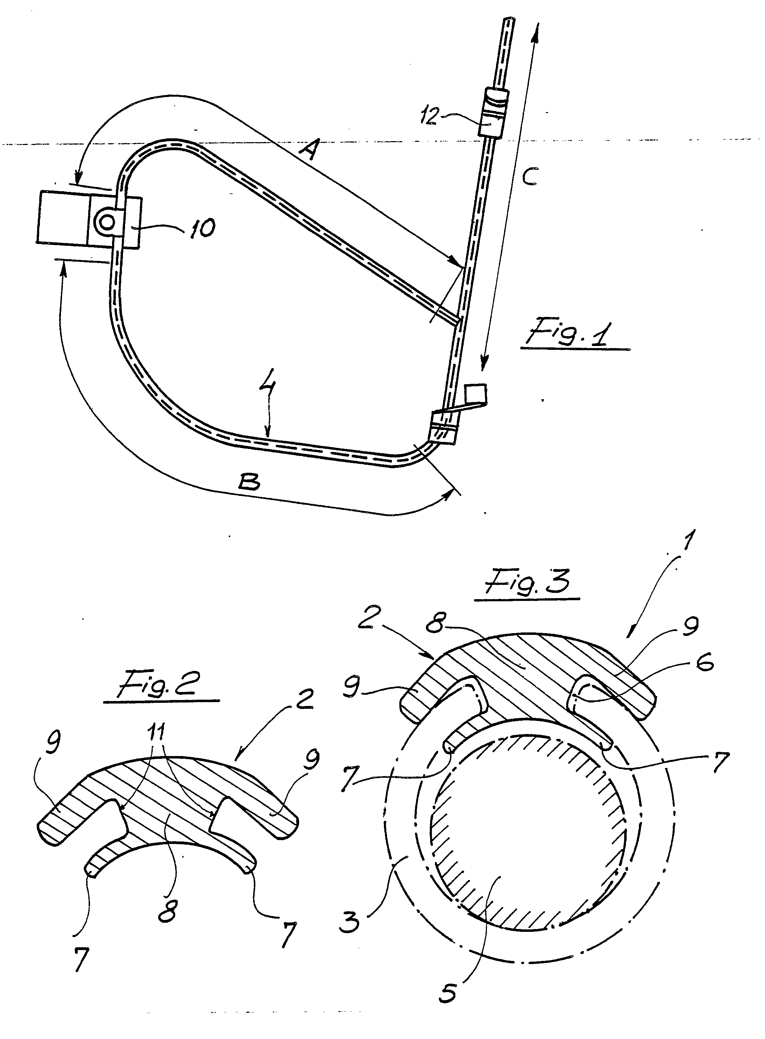

Figure 1 is an overall view of a powered window regulator assembly, showing the sections in which this strip is applied;

Figure 2 is a very enlarged view of the said strip, illustrating the special shape of the strip which enables it to clip into the open window guide in which the flexible rack cable runs; and

Figure 3 is an enlarged sectional view of a tubular window guide with the strip of this invention clipped into it.

Referring to these figures, the invention 1 in question basically refers to a contoured strip 2 made of antifriction plastic material, for example high density polyethylene plus graphite, this example being merely illustrative and non-limiting, to be applied to the open tubular profile 3 which constitutes the sliding guide 4 of the flexible rack cable 5 and provided with a slit 6 running longitudinally.

The said strip 2 has two inside tongues 7, which are joined to the central body 8 and form the recovery clearance and antifriction seat and two larger tongues 9 on the outside, also joined to the central body 8 of the strip 2, forming a genuine protection against dust for the window guide 4.

Thus a slot 11 is created between the inside tongues 7 and the outside tongues 9 so that the strip can be applied onto the edges of the tubular profile 3 of the window guide.

In practice, this strip 2 is applied longitudinally in shaped sections A and B of the window guide which lead off from the driving mechanism. The flexible rack cable 5 is in fact subjected to the greatest mechanical stress in the immediate vicinity of the geared motor because the path it follows is not straight and because of the longitudinal stress which is transmitted to the window glass, which produces noise since, as is known, the window is pulled by the flexible cable 5 along the vertical section C by means of the support plate 12.

To conclude, it must be emphasised that this embodiment does not limit the scope of the invention and that numerous modifications, additions, variations or replacements can be made to this invention without altering either its spirit or scope and while still remaining within its scope of protection as defined in the claims attached hereto.

## Claims

1. Noise damping and clearance recovery contoured strip for tubular window regulator guides, characterised by the fact that it can be applied along the longitudinal slit of the window guide in order to deaden the noise produced by the movement of the flexible rack cable and at the same time reduce the play of the said cable.

2. Strip according to claim 1, characterised by the fact that it consists of a central body whose size approximately corresponds to the width of the longitudinal slit in the tubular regulator guide, with two inside tongues and two outside tongues running off from the said central body, both following the curvature of the tubular guide for the flexible rack cable, said pairs of tongues creating between them a groove for clipping onto the edges of the slit in the tubular guide.

3. Strip according to claim 2, characterised by the fact that the inside tongues of the strip reduce the coupling tolerances between rock cable and regulator guide, thus obtaining a more precise seat which considerably reduces the rattling of the rack itself and the consequent friction induced.

4. Strip according to claim 2, characterised by the fact that the outside tongues of the strip also function as an anti-dust gasket in order to permit the flexible rack cable to run with maximum efficiency at all times.

5. Strip according to one or more of the preceding claims, characterised by the fact that it is made of a plastic material.

6. Strip according to claim 5, characterised by the fact that the preferred plastic material is high density polyethylene plus graphite.

_Fig. 1_

_Fig. 3_

_Fig. 2_